(19) Europäisches Patentamt
European Patent Office
Office européen des brevets

(11) **EP 4 079 708 B1**

(12) **EUROPEAN PATENT SPECIFICATION**

(45) Date of publication and mention
of the grant of the patent:
**03.09.2025 Bulletin 2025/36**

(21) Application number: **20903206.9**

(22) Date of filing: **29.10.2020**

(51) International Patent Classification (IPC):
**C04B 35/5835** (2006.01)    **C04B 35/645** (2006.01)
**C04B 35/626** (2006.01)    **C04B 35/5831** (2006.01)

(52) Cooperative Patent Classification (CPC):
**C04B 35/5831; C04B 35/6303;** C04B 35/62675;
C04B 35/645; C04B 2235/3217; C04B 2235/3839;
C04B 2235/3843; C04B 2235/386;
C04B 2235/3886; C04B 2235/404;
C04B 2235/5436; C04B 2235/656;
C04B 2235/6567; C04B 2235/72; C04B 2235/784;
(Cont.)

(86) International application number:
**PCT/JP2020/040554**

(87) International publication number:
**WO 2021/124700 (24.06.2021 Gazette 2021/25)**

(54) **CUBIC BORON NITRIDE SINTERED BODY**

KUBISCHER BORNITRIDSINTERKÖRPER

CORPS FRITTÉ DE NITRURE DE BORE CUBIQUE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **16.12.2019 JP 2019226360**

(43) Date of publication of application:
**26.10.2022 Bulletin 2022/43**

(73) Proprietor: **Sumitomo Electric Hardmetal Corp.
Itami-shi, Hyogo 664-0016 (JP)**

(72) Inventors:
• **ABE, Machiko**
  **Itami-shi, Hyogo 664-0016 (JP)**
• **KUKINO, Satoru**
  **Itami-shi, Hyogo 664-0016 (JP)**
• **MATSUKAWA, Michiko**
  **Itami-shi, Hyogo 664-0016 (JP)**
• **HIGASHI, Taisuke**
  **Itami-shi, Hyogo 664-0016 (JP)**

(74) Representative: **Boult Wade Tennant LLP
Salisbury Square House
8 Salisbury Square
London EC4Y 8AP (GB)**

(56) References cited:
EP-A1- 3 578 534      WO-A1-2006/112156
WO-A1-2016/104563     JP-A- 2008 208 027
JP-A- 2015 505 740    JP-A- H10 226 575
US-A1- 2017 369 314

EP 4 079 708 B1

(52) Cooperative Patent Classification (CPC): (Cont.)
C04B 2235/80; C04B 2235/96

# EP 4 079 708 B1

**Description**

TECHNICAL FIELD

The present disclosure relates to a cubic boron nitride sintered material

BACKGROUND ART

A cubic boron nitride (hereinafter, also referred to as "cBN") sintered material has very high hardness and has excellent thermal stability and chemical stability, and is therefore used in a cutting tool or a wear-resistant tool.

Each of Japanese Patent Laying-Open No. 2005-187260 (PTL 1) and WO 2005/066381 (PTL 2) discloses a method of obtaining a cubic boron nitride including cBN grains and a binder by mixing a cubic boron nitride powder and a binder powder to obtain a powder mixture and sintering the powder mixture under an ultra-high pressure and high temperature condition.

Each of Japanese Patent Laying-Open No. 2015-202981 (PTL 3) and Japanese Patent Laying-Open No. 2015-202980 (PTL 4) discloses a method of obtaining a cubic boron nitride composite sintered material including a cubic boron nitride polycrystalline material and a ceramic phase by mixing normal pressure type boron nitride and a ceramic to obtain a mixture and sintering the mixture under an ultra-high pressure and high temperature condition. EP 3 578 534 discloses a cubic boron nitride sintered material.

CITATION LIST

PATENT LITERATURE

PTL 1: Japanese Patent Laying-Open No. 2005-187260

PTL 2: WO 2005/066381

PTL 3: Japanese Patent Laying-Open No. 2015-202981

PTL 4: Japanese Patent Laying-Open No. 2015-202980

SUMMARY OF INVENTION

A cubic boron nitride sintered material according to the present disclosure is a cubic boron nitride sintered material including: more than or equal to 40 volume% and less than or equal to 85 volume% of cubic boron nitride grains; and a binder phase, wherein

the binder phase includes at least one selected from a group consisting of one or more first compounds and a solid solution originated from the first compounds, or includes at least one selected from a group consisting of the one or more first compounds and the solid solution originated from the first compounds and an aluminum compound, the one or more first compounds consisting of at least one element selected from a group consisting of titanium, zirconium, hafnium, vanadium, niobium, tantalum, chromium, molybdenum, and tungsten, and at least one element selected from a group consisting of nitrogen, carbon, boron, and oxygen,
the cubic boron nitride grains include, on number basis, more than or equal to 50% of cubic boron nitride grains each having an equivalent circle diameter of more than 0.5 $\mu$m, and includes, on number basis, less than or equal to 50% of cubic boron nitride grains each having an equivalent circle diameter of more than 2 $\mu$m, and
when a mass of the cubic boron nitride grains is assumed as 100 mass%, a total content of lithium, magnesium, calcium, strontium, beryllium, and barium in the cubic boron nitride grains is less than 0.001 mass%.

A method of producing a cubic boron nitride sintered material according to the present disclosure, not part of the invention, is a method of producing the above-described cubic boron nitride sintered material, the method including:

obtaining a powder mixture by mixing a hexagonal boron nitride powder and a binder powder; and
obtaining the cubic boron nitride sintered material by sintering the powder mixture by increasing a pressure to more than or equal to 8 GPa and less than or equal to 20 GPa, increasing a temperature to more than or equal to 2300°C and

3

less than or equal to 2500°C, and holding, for more than or equal to 30 minutes and less than 90 minutes, the powder mixture at maximum pressure and maximum temperature reached by increasing the pressure and the temperature.

DETAILED DESCRIPTION

[Problem to be Solved by the Present Disclosure]

Each of tools employing the cubic boron nitride sintered materials of PTL 1 and PTL 2 has been required to attain further improved tool performance such as wear resistance and breakage resistance particularly when used in high-load processing of hardened steel. As a result of reviewing mechanisms of occurrence of wear and breakage in each of the tools employing the cubic boron nitride sintered materials of PTL 1 and PTL 2, the present inventors have newly anticipated the following mechanism.

In each of PTL 1 and PTL 2, the cubic boron nitride powder is used as a source material. The cubic boron nitride powder is produced by treating hexagonal boron nitride (hereinafter, also referred to as "hBN") and a catalyst under high temperature and high pressure that are thermal stability conditions for cBN. As the catalyst, an alkali metal element (lithium), an alkaline earth metal element (magnesium, calcium, strontium, beryllium, or barium), or the like is generally used. Therefore, the obtained cubic boron nitride powder includes the catalyst element.

When cutting is performed using a tool employing a cubic boron nitride sintered material, pressure and temperature of the tool in the vicinity of a contact point with a workpiece are increased. Particularly, in the case of high-load processing of hardened steel, the pressure and temperature are significantly increased. When the cubic boron nitride sintered material includes the catalyst element, the catalyst element promotes phase conversion from cubic boron nitride to hexagonal boron nitride under the condition of the pressure and temperature of the tool in the vicinity of the contact point with the workpiece in the case of the high-load processing of hardened steel. Therefore, thermal conductivity or hardness tends to be decreased in the vicinity of the contact point of the cutting edge of the tool with the workpiece. The decreased thermal conductivity and decreased hardness are considered to cause a decrease in cutting performance such as wear resistance and breakage resistance.

Each of tools employing the cubic boron nitride composite sintered materials of PTL 3 and PTL 4 has been also required to attain further improved tool performance such as wear resistance and breakage resistance particularly when used in high-load processing of hardened steel. As a result of reviewing mechanisms of occurrence of wear and breakage in each of the tools employing the cubic boron nitride composite sintered materials of PTL 3 and PTL 4, the present inventors have newly anticipated the following mechanism.

In each of PTL 3 and PTL 4, the cubic boron nitride single crystal in the cubic boron nitride polycrystalline material has an small average crystal grain size of less than or equal to 500 nm and therefore has fine grains. When a large amount of the fine grain component exists in the cubic boron nitride sintered material, toughness and thermal conductivity of the cubic boron nitride sintered material tend to be decreased. This is considered to cause a decrease in tool performance such as wear resistance and breakage resistance particularly in the high-load processing of hardened steel.

Based on the newly anticipated mechanism, the present inventors hypothesized that the tool performance such as wear resistance and breakage resistance is affected by the amount of the catalyst element in the cubic boron nitride sintered material and the grain sizes of the cubic boron nitride single crystal.

The present disclosure has been obtained by the present inventors as a result of diligent study based on the anticipated new mechanism and the hypothesis.

It is an object of the present disclosure to provide a cubic boron nitride sintered material that can have excellent cutting performance even in high-load processing of hardened steel when used as a tool.

[Advantageous Effect of the Present Disclosure]

The cubic boron nitride sintered material according to the present disclosure can have excellent cutting performance even in high-load processing of hardened steel when used as a tool.

[Description of Embodiments]

First, embodiments of the present disclosure are listed and described.

A cubic boron nitride sintered material according to the present disclosure is a cubic boron nitride sintered material including: more than or equal to 40 volume% and less than or equal to 85 volume% of cubic boron nitride grains; and a binder phase, wherein

the binder phase includes at least one selected from a group consisting of one or more first compounds and a solid solution originated from the first compounds, or includes at least one selected from a group consisting of the one or more first compounds and the solid solution originated from the first compounds and an aluminum compound, the one or more first compounds consisting of at least one element selected from a group consisting of titanium, zirconium, hafnium, vanadium, niobium, tantalum, chromium, molybdenum, and tungsten, and at least one element selected from a group consisting of nitrogen, carbon, boron, and oxygen,

the cubic boron nitride grains include, on number basis, more than or equal to 50% of cubic boron nitride grains each having an equivalent circle diameter of more than 0.5 µm, and includes, on number basis, less than or equal to 50% of cubic boron nitride grains each having an equivalent circle diameter of more than 2 µm, and

when a mass of the cubic boron nitride grains is assumed as 100 mass%, a total content of lithium, magnesium, calcium, strontium, beryllium, and barium in the cubic boron nitride grains is less than 0.001 mass%.

The cubic boron nitride sintered material according to the present disclosure can have excellent cutting performance even in high-load processing of hardened steel when used as a tool.

In an X-ray diffraction spectrum of the cubic boron nitride sintered material, a relation of the following formula I is preferably indicated:

$$(IA+IB+IC)/ID \leq 0.05 \ ... \ \text{formula I,}$$

, where IA represents a peak intensity originated from compressed hexagonal boron nitride, IB represents a peak intensity originated from hexagonal boron nitride, IC represents a peak intensity originated from wurtzite type boron nitride, and ID represents a peak intensity originated from cubic boron nitride.

Thus, the breakage resistance of the tool using the cubic boron nitride is further improved.

A method of producing a cubic boron nitride sintered material according to the present disclosure, but not part of the invention, is a method of producing the above-described cubic boron nitride sintered material, the method including:

obtaining a powder mixture by mixing a hexagonal boron nitride powder and a binder powder; and

obtaining the cubic boron nitride sintered material by sintering the powder mixture by increasing a pressure to more than or equal to 8 GPa and less than or equal to 20 GPa, increasing a temperature to more than or equal to 2300°C and less than or equal to 2500°C, and holding, for more than or equal to 30 minutes and less than 90 minutes, the powder mixture at maximum pressure and maximum temperature reached by increasing the pressure and the temperature.

Thus, the cubic boron nitride sintered material can be obtained which can have excellent cutting performance even in high-load processing of hardened steel when used as a tool.

[Details of Embodiments of the Present Disclosure]

The following describes a cubic boron nitride sintered material and a method of producing the cubic boron nitride sintered material.

When a compound or the like is expressed by a chemical formula in the present specification and an atomic ratio is not particularly limited, it is assumed that all the conventionally known atomic ratios are included. The atomic ratio should not be necessarily limited only to one in the stoichiometric range. For example, when "TiN" is described, an atomic ratio in the TiN include all the conventionally known atomic ratios. The same also applies to compounds other than the "TiN".

[First Embodiment: Cubic Boron Nitride Sintered Material]

A cubic boron nitride sintered material according to the present disclosure is a cubic boron nitride sintered material including: more than or equal to 40 volume% and less than or equal to 85 volume% of cubic boron nitride grains; and a binder phase, wherein the binder phase includes at least one selected from a group consisting of one or more first compounds and a solid solution originated from the first compounds, or includes at least one selected from a group consisting of the one or more first compounds and the solid solution originated from the first compounds and an aluminum compound, the one or more first compounds consisting of at least one element selected from a group consisting of titanium, zirconium, hafnium, vanadium, niobium, tantalum, chromium, molybdenum, and tungsten, and at least one element selected from a group consisting of nitrogen, carbon, boron, and oxygen, the cubic boron nitride grains include, on number basis, more than or equal to 50% of cubic boron nitride grains each having an equivalent circle diameter of more than 0.5 µm, and includes, on number basis, less than or equal to 50% of cubic boron nitride grains each having an equivalent circle diameter of more than 2 µm, and when a mass of the cubic boron nitride grains is assumed as 100 mass%, a total content of lithium, magnesium, calcium, strontium, beryllium, and barium in the cubic boron nitride grains is less than 0.001 mass%.

The cubic boron nitride sintered material according to the present disclosure can have excellent cutting performance even in high-load processing of hardened steel when used as a tool. This is presumably due to the following reasons (i) to (iv).

(i) The cubic boron nitride sintered material according to the present disclosure includes more than or equal to 40 volume% and less than or equal to 85 volume% of the cubic boron nitride grains having excellent strength and toughness. Thus, the cubic boron nitride sintered material can also have excellent strength and toughness. Therefore, a tool employing the cubic boron nitride sintered material can have excellent wear resistance and breakage resistance even in high-load processing of hardened steel.

(ii) In the cubic boron nitride sintered material according to the present disclosure, the binder phase includes at least one selected from a group consisting of one or more first compounds and a solid solution originated from the first compounds, or includes at least one selected from a group consisting of the one or more first compounds and the solid solution originated from the first compounds and an aluminum compound, the one or more first compounds consisting of at least one element selected from a group consisting of titanium, zirconium, hafnium, vanadium, niobium, tantalum, chromium, molybdenum, and tungsten, and at least one element selected from a group consisting of nitrogen, carbon, boron, and oxygen. Each of the first compounds has high strength and toughness itself and serves to improve binding force between the cBN grains. Therefore, a tool employing the cubic boron nitride sintered material including the first compound(s) as a binder phase can have excellent wear resistance and breakage resistance even in high-load processing of hardened steel.

(iii) In the cubic boron nitride sintered material according to the present disclosure, the cubic boron nitride grains include, on number basis, more than or equal to 50% of cubic boron nitride grains each having an equivalent circle diameter of more than 0.5 $\mu$m, and includes, on number basis, less than or equal to 50% of cubic boron nitride grains each having an equivalent circle diameter of more than 2 $\mu$m.

When the cubic boron nitride grains are fine grains, the toughness and thermal conductivity of the cubic boron nitride sintered material tend to be decreased. In the cubic boron nitride sintered material according to the present disclosure, the cubic boron nitride grains each having an equivalent circle diameter of more than 0.5 $\mu$m are more than or equal to 50% on number basis. That is, since the ratio of the cubic boron nitride grains each having an equivalent circle diameter of less than or equal to 0.5 $\mu$m, i.e., the ratio of the fine grains, is less than or equal to 50% and therefore the ratio of the fine grains is small, the cubic boron nitride sintered material can have excellent toughness and thermal conductivity.

When the cubic boron nitride grains are coarse grains, the strength of the cubic boron nitride sintered material tends to be decreased. In the cubic boron nitride sintered material according to the present disclosure, since the ratio of the cubic boron nitride grains each having an equivalent circle diameter of more than 2 $\mu$m, i.e., the ratio of the coarse grains, is less than or equal to 50% and therefore the ratio of the coarse grains is small, the cubic boron nitride sintered material can have excellent strength.

Therefore, the tool employing the cubic boron nitride sintered material according to the present disclosure can have excellent wear resistance and breakage resistance even in the high-load processing of hardened steel.

(iv) In the cubic boron nitride sintered material according to the present disclosure, when a mass of the cubic boron nitride grains is assumed as 100 mass%, a total content of lithium, magnesium, calcium, strontium, beryllium, and barium (hereinafter, these elements are also referred to as "catalyst elements") in the cubic boron nitride grains is less than 0.001 mass%. When the catalyst elements are present in the cubic boron nitride grains, the catalyst elements promote phase conversion from cubic boron nitride to hexagonal boron nitride under a condition of pressure and temperature in the vicinity of a contact point between the tool and a workpiece in the high-load processing of hardened steel. Therefore, thermal conductivity and hardness tend to be decreased in the vicinity of the contact point of the cutting edge of the tool with the workpiece.

In the cubic boron nitride sintered material according to the present disclosure, since the total content of the catalyst elements in the cubic boron nitride grains is less than 0.001 mass%, the phase conversion from cubic boron nitride to hexagonal boron nitride by the catalyst elements is less likely to occur. Therefore, the tool employing the cubic boron nitride sintered material according to the present disclosure can have excellent wear resistance and breakage resistance even in the high-load processing of hardened steel.

<Composition>

The cubic boron nitride sintered material according to the present disclosure includes: more than or equal to 40 volume% and less than or equal to 85 volume% of the cubic boron nitride grains; and the binder phase.

Since the cubic boron nitride sintered material according to the present disclosure includes the cubic boron nitride having excellent strength and toughness, the cubic boron nitride sintered material can also have excellent strength and toughness. Therefore, the tool employing the cubic boron nitride sintered material can have excellent wear resistance and breakage resistance even in the high-load processing of hardened steel.

The lower limit of the content ratio of the cBN grains in the cBN sintered material is 40 volume%, and is preferably 45 volume%. The upper limit of the content ratio of the cBN grains in the cBN sintered material is 85 volume%, and is preferably 75 volume%. The content ratio of the cBN grains in the cBN sintered material is preferably more than or equal to 45 volume% and less than or equal to 75 volume%.

Since the cubic boron nitride sintered material according to the present disclosure has high strength and includes the binder phase that serves to improve binding force between the cBN grains, the cubic boron nitride sintered material can also have excellent strength and toughness. Therefore, the tool employing the cubic boron nitride sintered material can have excellent wear resistance and breakage resistance even in the high-load processing of hardened steel.

The lower limit of the content ratio of the binder phase in the cBN sintered material is preferably 15 volume%, and is more preferably 25 volume%. The upper limit of the content ratio of the binder phase in the cBN sintered material is preferably 60 volume%, and is more preferably 55 volume%. The content ratio of the binder phase in the cBN sintered material is preferably more than or equal to 15 volume% and less than or equal to 60 volume%, and is more preferably more than or equal to 25 volume% and less than or equal to 55 volume%.

The content ratio (volume%) of the cBN grains and the content ratio (volume%) of the binder phase in the cBN sintered material can be checked by performing structure observation, elemental analysis, and the like onto the cBN sintered material using an energy dispersive X-ray analysis device (EDX) ("Octane Elect EDS system" (trademark) provided by EDAX) accompanied with a scanning electron microscope (SEM) ("JSM-7800F" (trademark) provided by JEOL).

Specifically, the content ratio (volume%) of the cBN grains can be calculated as follows. First, the cBN sintered material is cut at an arbitrary location to produce a sample including a cross section of the cBN sintered material. For the formation of the cross section, a focused ion beam device, a cross section polisher device, or the like can be used. Next, the cross section is observed by the SEM at a magnification of 5000x to obtain a reflected electron image. In the reflected electron image, the cBN grains look black (dark fields) and a region having the binder phase existing therein is gray or white (bright fields).

Next, the reflected electron image is subjected to binarization processing using image analysis software (for example, "WinROOF" provided by Mitani Corporation). From the image having been through the binarization processing, the area ratio of pixels originated from dark fields (pixels originated from the cBN grains) in the area of the measurement visual field is calculated. The calculated area ratio is regarded as volume%, thereby finding the content ratio (volume%) of the cBN grains.

From the image having been through the binarization processing, the area ratio of pixels originated from bright fields (pixels originated from the binder phase) in the area of the measurement visual field is calculated, thereby finding the content ratio (volume%) of the binder phase.

The cubic boron nitride sintered material according to the present disclosure may include an inevitable impurity as long as the effect of the present disclosure is exhibited. Examples of the inevitable impurity include tungsten and cobalt. When the cubic boron nitride sintered material includes such an inevitable impurity, the content of the inevitable impurity is preferably less than or equal to 0.1 mass%. The content of the inevitable impurity can be measured by secondary ion mass spectrometry (SIMS).

The cubic boron nitride sintered material according to the present disclosure may include at least one of compressed hexagonal boron nitride, hexagonal boron nitride, and wurtzite type boron nitride within the scope in which the effects of the present disclosure are exhibited. Here, the "compressed hexagonal boron nitride" refers to a hexagonal boron nitride having a crystal structure similar to the crystal structure of an ordinary hexagonal boron nitride and having an interplanar spacing smaller than the interplanar spacing (0.333 nm) of the ordinary hexagonal boron nitride in a c-axis direction. The respective content ratios of the compressed hexagonal boron nitride, the hexagonal boron nitride, and the wurtzite type boron nitride with respect to the cubic boron nitride will be described in detail in the below-described section <X-Ray Diffraction Spectrum>.

<Cubic Boron Nitride Grains>

(Equivalent Circle Diameter)

The cubic boron nitride grains included in the cubic boron nitride sintered material according to the present disclosure include, on number basis, more than or equal to 50% of cubic boron nitride grains each having an equivalent circle diameter of more than 0.5 $\mu$m, and includes, on number basis, less than or equal to 50% of cubic boron nitride grains each having an equivalent circle diameter of more than 2 $\mu$m. It should be noted that when calculating on number basis, grains each having an equivalent circle diameter of less than 0.05 $\mu$m are not counted.

When the ratio of the cubic boron nitride grains each having an equivalent circle diameter of more than 0.5 $\mu$m is more than or equal to 50%, the cubic boron nitride sintered material can have excellent toughness and thermal conductivity. When the ratio of the cubic boron nitride grains each having an equivalent circle diameter of more than 2 $\mu$m is less than or equal to 50%, the cubic boron nitride sintered material can have excellent strength. Therefore, the tool employing the cubic boron nitride sintered material according to the present disclosure can have excellent wear resistance and breakage resistance even in the high-load processing of hardened steel.

The lower limit of the number-based ratio of the cubic boron nitride grains each having an equivalent circle diameter of more than 0.5 $\mu$m in the whole of the cubic boron nitride grains is 50%, and is preferably 70%. The upper limit of the number-based ratio of the cubic boron nitride grains each having an equivalent circle diameter of more than 0.5 $\mu$m in the whole of the cubic boron nitride grains is preferably 100%. The number-based ratio of the cubic boron nitride grains each having an equivalent circle diameter of more than 0.5 $\mu$m in the whole of the cubic boron nitride grains is preferably more than or equal to 50% and less than or equal to 100%, and is more preferably more than or equal to 70% and less than or equal to 100%.

The lower limit of the number-based ratio of the cubic boron nitride grains each having an equivalent circle diameter of more than 2 $\mu$m in the whole of the cubic boron nitride grains is preferably 0%. The upper limit of the ratio of the cubic boron nitride grains each having an equivalent circle diameter of more than 2 $\mu$m in the whole of the cubic boron nitride grains is 50%, and is preferably 20%. The ratio of the cubic boron nitride grains each having an equivalent circle diameter of more than 2 $\mu$m in the whole of the cubic boron nitride grains is preferably more than or equal to 0% and less than or equal to 50%, and is more preferably more than or equal to 0% and less than or equal to 20%.

The following specifically describes: a method of calculating the number-based ratio of the cubic boron nitride grains each having an equivalent circle diameter of more than 0.5 $\mu$m in the cubic boron nitride grains; and a method of calculating the number-based ratio of the cubic boron nitride grains each having an equivalent circle diameter of more than 2 $\mu$m in the cubic boron nitride grains.

First, the cubic boron nitride sintered material is cut by a diamond grindstone electrodeposited wire or the like so as to expose measurement positions, and the cross section thereof is polished. When the cubic boron nitride sintered material is used as a portion of a tool, the portion of the cubic boron nitride sintered material is cut out by the diamond grindstone electrodeposited wire or the like, and the cross section of the cut-out portion is polished. Five measurement positions are arbitrarily set on the polished surface. Five SEM images are obtained by observing the five measurement positions using an SEM ("JSM-7500F" (trademark) provided by JEOL). The size of the measurement visual field is set to 12 $\mu$m $\times$ 15 $\mu$m and the observation magnification is set to 10000x.

By processing each of the five SEM images using image processing software (Win Roof ver.7.4.5), the total number of the cubic boron nitride grains observed in the measurement visual field and the equivalent circle diameter of each of the cubic boron nitride grains are calculated.

The ratio of the number of the cubic boron nitride grains each having an equivalent circle diameter of more than 0.5 $\mu$m is calculated using, as a denominator, the total number of the cubic boron nitride grains included in each measurement visual field. The average value of the ratios of the numbers of the cubic boron nitride grains each having an equivalent circle diameter of more than 0.5 $\mu$m in the five measurement visual fields corresponds to the number-based ratio of the cubic boron nitride grains each having an equivalent circle diameter of more than 0.5 $\mu$m in the cubic boron nitride grains.

The ratio of the number of the cubic boron nitride grains each having an equivalent circle diameter of more than 2 $\mu$m is calculated using, as a denominator, the total number of the cubic boron nitride grains included in each measurement visual field. The average value of the ratios of the numbers of the cubic boron nitride grains each having an equivalent circle diameter of more than 2 $\mu$m in the five measurement visual fields corresponds to the number-based ratio of the cubic boron nitride grains each having an equivalent circle diameter of more than 2 $\mu$m in the cubic boron nitride grains.

It should be noted that in the measurement performed by the Applicant, as long as the total number of the cubic boron nitride grains and the equivalent circle diameter of each of the cubic boron nitride grains are measured in the same sample, results of measurement were not substantially varied even when measurement visual fields to be selected were changed and calculation was performed multiple times. It was confirmed that the results of measurement are not intentional even when a measurement visual field is set arbitrarily.

(Catalyst Elements)

In the cubic boron nitride sintered material according to the present disclosure, when the mass of the cubic boron nitride grains is assumed as 100 mass%, the total content of lithium, magnesium, calcium, strontium, beryllium, and barium in the cubic boron nitride grains is less than 0.001 mass%. In the cubic boron nitride sintered material according to the present disclosure, the content of the catalyst elements that promote the phase conversion from cubic boron nitride to hexagonal boron nitride is very small or no such catalyst elements are present, so that the phase conversion from cubic boron nitride to hexagonal boron nitride by the catalyst elements is less likely to occur even under the condition of pressure and temperature in the high-load processing of hardened steel. Therefore, the tool employing the cubic boron nitride sintered material according to the present disclosure can have excellent wear resistance and breakage resistance even in the high-load processing of hardened steel.

The lower limit of the total content of the catalyst elements in the cubic boron nitride grains is preferably 0 mass%. The upper limit of the total content of these catalyst elements is less than 0.001 mass%. The total content of these catalyst elements is preferably more than or equal to 0 mass% and less than 0.001 mass%.

The content of the catalyst elements in the cubic boron nitride grains can be measured by high-frequency induction plasma emission spectrometry ((ICP emission spectroscopy) with the use of a device "ICPS-8100" (trademark) provided by Shimadzu Corporation. Specifically, the measurement can be performed in the following procedure.

First, the cubic boron nitride sintered material is immersed in hydrofluoric-nitric acid for 48 hours in a sealed container so as to dissolve the binder phase in the hydrofluoric-nitric acid. Cubic boron nitride grains remaining in the hydrofluoric-nitric acid are subjected to the high-frequency induction plasma emission spectrometry so as to measure the content of each of the catalyst elements. Thus, the total content of the catalyst elements in the cubic boron nitride grains can be measured.

<Binder Phase>

The binder phase included in the cubic boron nitride sintered material according to the present disclosure includes at least one selected from a group consisting of one or more first compounds and a solid solution originated from the first compounds, or includes at least one selected from a group consisting of the one or more first compounds and the solid solution originated from the first compounds and an aluminum compound, the one or more first compounds consisting of at least one element (hereinafter, also referred to as "first element") selected from a group consisting of titanium (Ti), zirconium (Zr), hafnium (Hf), vanadium (V), niobium (Nb), tantalum (Ta), chromium (Cr), molybdenum (Mo), and tungsten (W), and at least one element selected from a group consisting of nitrogen (N), carbon (C), boron (B), and oxygen (O). Since each of the first compounds has high strength and toughness itself and can serve to firmly bind the cubic boron nitride grains, the strength of the sintered material is improved, with the result that the sintered material can have excellent wear resistance.

That is, the binder phase can have any one of the following configurations (1) to (6):

(1) a binder phase including the first compound(s);
(2) a binder phase including the solid solution originated from the first compounds;
(3) a binder phase including the first compound(s) and the solid solution originated from the first compounds;
(4) a binder phase including the first compound(s) and the aluminum compound;
(5) a binder phase including the solid solution originated from the first compounds and the aluminum compound; and
(6) a binder phase including the first compound(s), the solid solution originated from the first compounds, and the aluminum compound.

Examples of the first compound (nitride) composed of the first element(s) and nitrogen include titanium nitride (TiN), zirconium nitride (ZrN), hafnium nitride (HfN), vanadium nitride (VN), niobium nitride (NbN), tantalum nitride (TaN), chromium nitride ($Cr_2N$), molybdenum nitride (MoN), tungsten nitride (WN), titanium zirconium nitride (TiZrN), titanium hafnium nitride (TiHfN), titanium vanadium nitride (TiVN), titanium niobium nitride (TiNbN), titanium tantalum nitride (TiTaN), titanium chromium nitride (TiCrN), titanium molybdenum nitride (TiMoN), titanium tungsten nitride (TiWN), zirconium hafnium nitride (ZrHfN), zirconium vanadium nitride (ZrVN), zirconium niobium nitride (ZrNbN), zirconium tantalum nitride (ZrTaN), zirconium chromium nitride (ZrCrN), zirconium molybdenum nitride (ZrMoN), zirconium tungsten nitride (ZrWN), hafnium vanadium nitride (HfVN), hafnium niobium nitride (HfNbN), hafnium tantalum nitride (HfTaN), hafnium chromium nitride (HfCrN), hafnium molybdenum nitride (HfMoN), hafnium tungsten nitride (HfWN), vanadium niobium nitride (VNbN), vanadium tantalum nitride (VTaN), vanadium chromium nitride (VCrN), vanadium molybdenum nitride (VMoN), vanadium tungsten nitride (VWN), niobium tantalum nitride (NbTaN), niobium chromium nitride (NbCrN), niobium molybdenum nitride (NbMoN), niobium tungsten nitride (NbWN), tantalum chromium nitride (TaCrN), tantalum molybdenum nitride (TaMoN), tantalum tungsten nitride (TaWN), chromium molybdenum nitride (CrMoN), chromium tungsten nitride (CrWN), and molybdenum tungsten nitride (MoWN).

Examples of the first compound (carbide) composed of the first element(s) and carbon include titanium carbide (TiC), zirconium carbide (ZrC), hafnium carbide (HfC), vanadium carbide (VC), niobium carbide (NbC), tantalum carbide (TaC), chromium carbide ($Cr_2C$), molybdenum carbide (MoC), tungsten carbide (WC), titanium zirconium carbide (TiZrC), titanium hafnium carbide (TiHfC), titanium vanadium carbide (TiVC), titanium niobium carbide (TiNbC), titanium tantalum carbide (TiTaC), titanium chromium carbide (TiCrC), titanium molybdenum carbide (TiMoC), titanium tungsten carbide (TiWC), zirconium hafnium carbide (ZrHfC), zirconium vanadium carbide (ZrVC), zirconium niobium carbide (ZrNbC), zirconium tantalum carbide (ZrTaC), zirconium chromium carbide (ZrCrC), zirconium molybdenum carbide (ZrMoC), zirconium tungsten carbide (ZrWC), hafnium vanadium carbide (HfVC), hafnium niobium carbide (HfNbC), hafnium tantalum carbide (HfTaC), hafnium chromium carbide (HfCrC), hafnium molybdenum carbide (HfMoC), hafnium tungsten carbide (HfWC), vanadium niobium carbide (VNbC), vanadium tantalum carbide (VTaC), vanadium chromium carbide (VCrC), vanadium molybdenum carbide (VMoC), vanadium tungsten carbide (VWC), niobium tantalum carbide (NbTaC), niobium chromium carbide (NbCrC), niobium molybdenum carbide (NbMoC), niobium tungsten carbide (NbWC), tantalum chromium carbide (TaCrC), tantalum molybdenum carbide (TaMoC), tantalum tungsten carbide (TaWC), chromium molybdenum carbide (CrMoC), chromium tungsten carbide (CrWC), and molybdenum tungsten carbide (MoWC).

Examples of the first compound (carbonitride) composed of the first element(s), carbon, and nitrogen include titanium carbonitride (TiCN), zirconium carbonitride (ZrCN), and hafnium carbonitride (HfCN).

Examples of the first compound (boride) composed of the first element(s) and boron include titanium boride ($TiB_2$), zirconium boride ($ZrB_2$), hafnium boride ($HfB_2$), vanadium boride ($VB_2$), niobium boride ($NbB_2$), tantalum boride ($TaB_2$), chromium boride ($CrB_2$), molybdenum boride ($MoB_2$), and tungsten boride (WB).

Examples of the first compound (oxide) composed of the first element(s) and oxygen include titanium oxide ($TiO_2$), zirconium oxide (ZrOz), hafnium oxide ($HfO_2$), vanadium oxide ($V_2O_5$), niobium oxide ($Nb_2O_5$), tantalum oxide ($Ta_2O_5$), chromium oxide ($Cr_2O_3$), molybdenum oxide ($MoO_3$), and tungsten oxide ($WO_3$).

Examples of the first compound (oxynitride) composed of the first element(s), nitrogen, and oxygen include titanium oxynitride (TiON), zirconium oxynitride (ZrON), hafnium oxynitride (HfON), vanadium oxynitride (VON), niobium oxynitride (NbON), tantalum oxynitride (TaON), chromium oxynitride (CrON), molybdenum oxynitride (MoON), and tungsten oxynitride (WON).

One of the first compounds may be solely used or two or more of the first compounds may be used in combination.

The binder phase can include the solid solution originated from the first compounds. Here, the solid solution originated from the first compounds refers to a state in which two or more of the first compounds are dissolved in the crystal structures of the compounds, and refers to an interstitial solid solution or a substitutional solid solution.

Examples of the aluminum compound include titanium aluminum nitride (TiAlN, $Ti_2AlN$, or $Ti_3AlN$), titanium aluminum carbide (TiAlC, $Ti_2AlC$, or $Ti_3AlC$), titanium aluminum carbonitride (TiAlCN, $Ti_2AlCN$, or $Ti_3AlCN$), aluminum boride ($AlB_2$), aluminum oxide ($Al_2O_3$), AlN (aluminum nitride), and SiAlON (sialon).

One of the aluminum compounds may be used or two or more of the aluminum compounds may be used in combination.

The binder phase can consist only of one or more selected from a group consisting of the first compound(s) and the solid solution of the first compounds. Further, the binder phase can consist of: more than or equal to 99.9 volume% of one or more selected from the group consisting of the first compound(s) and the solid solution of the first compounds; and a remainder.

The binder phase can consist only of one or more selected from the group consisting of the first compound(s) and the solid solution of the first compounds, and the aluminum compound(s). Further, the binder phase can consist of: more than or equal to 99.9 volume% of the total of one or more selected from the group consisting of the first compound(s) and the solid solution of the first compounds and the aluminum compound(s); and a remainder.

Here, the remainder corresponds to an inevitable impurity in the binder phase. The content ratio of the inevitable impurity in the cubic boron nitride sintered material is preferably less than or equal to 0.1 mass%.

The composition of the binder phase can be measured using an X-ray diffraction method. A specific measurement method is as follows.

First, the cubic boron nitride sintered material is cut by a diamond grindstone electrodeposited wire or the like to expose measurement positions, and the cross section thereof is polished. When the cubic boron nitride sintered material is used as a portion of a tool, the portion of the cubic boron nitride sintered material is cut out by the diamond grindstone electrodeposited wire or the like, and the cross section of the cut-out portion is polished. Five measurement positions are arbitrarily set on the polished surface.

An X-ray diffractometer ("MiniFlex600" (trademark) provided by Rigaku) is used to obtain an X-ray diffraction spectrum of the polished surface. Conditions for the X-ray diffractometer on this occasion are as follows.

Characteristic X ray: Cu-K$\alpha$ (wavelength of 1.54 Å)
Tube voltage: 45 kV
Tube current: 40 mA
Filter: multilayer mirror
Optical system: concentration method
X-ray diffraction method: $\theta$-2$\theta$ method.

Based on the obtained X-ray diffraction spectrum, the composition of the binder phase is identified.

<X-Ray Diffraction Spectrum>

In the cubic boron nitride sintered material according to the present disclosure, in an X-ray diffraction spectrum of the cubic boron nitride sintered material, a relation of the following formula I is preferably indicated:

$$(IA+IB+IC)/ID \leq 0.05 \ ... \ formula \ I,$$

, where IA represents a peak intensity originated from compressed hexagonal boron nitride, IB represents a peak intensity originated from hexagonal boron nitride, IC represents a peak intensity originated from wurtzite type boron nitride, and ID represents a peak intensity originated from cubic boron nitride.

The compressed hexagonal boron nitride, the hexagonal boron nitride, the wurtzite type boron nitride and the cubic boron nitride all have similar degrees of electron densities. Therefore, the ratio of peak intensity IA, peak intensity IB, peak intensity IC, and peak intensity ID in the X-ray diffraction spectrum can be regarded as the volume ratio of the compressed hexagonal boron nitride, the hexagonal boron nitride, the wurtzite type boron nitride, and the cubic boron nitride in the cubic boron nitride sintered material.

When peak intensity IA, peak intensity IB, peak intensity IC, and peak intensity ID satisfy the above-described relation of formula I, the volume ratio of the compressed hexagonal boron nitride, the hexagonal boron nitride, and the wurtzite type boron nitride in the cubic boron nitride sintered material is much smaller than the volume ratio of the cubic boron nitride. Therefore, the influence on the cubic boron nitride sintered material by the compressed hexagonal boron nitride, the hexagonal boron nitride, and the wurtzite type boron nitride, i.e., decreased strength and toughness, is very little, with the result that the cubic boron nitride sintered material can have excellent wear resistance and breakage resistance.

The following specifically describes a method of measuring each of peak intensity IA originated from the compressed hexagonal boron nitride, peak intensity IB originated from the hexagonal boron nitride, peak intensity IC originated from the wurtzite type boron nitride, and peak intensity ID originated from the cubic boron nitride.

First, the cubic boron nitride sintered material is cut by a diamond grindstone electrodeposited wire or the like so as to expose measurement positions, and the cross section thereof is polished. When the cubic boron nitride sintered material is used as a portion of a tool, the portion of the cubic boron nitride sintered material is cut out by the diamond grindstone electrodeposited wire or the like, and the cross section of the cut-out portion is polished. Five measurement positions are arbitrarily set on the polished surface.

An X-ray diffractometer ("MiniFlex600" (trademark) provided by Rigaku) is used to obtain an X-ray diffraction spectrum of the polished surface. Conditions for the X-ray diffractometer on this occasion are as follows.

Characteristic X ray: Cu-K$\alpha$ (wavelength of 1.54 Å)
Tube voltage: 45 kV
Tube current: 40 mA
Filter: multilayer mirror
Optical system: concentration method
X-ray diffraction method: $\theta$-$2\theta$ method.

In the obtained X-ray diffraction spectrum, the following peak intensity IA, peak intensity IB, peak intensity IC, and peak intensity ID are measured.

Peak intensity IA: the peak intensity of the compressed hexagonal boron nitride obtained by excluding background from a peak intensity at a diffraction angle $2\theta$ = about 28.5°.

Peak intensity IB: the peak intensity of the hexagonal boron nitride obtained by excluding background from a peak intensity at a diffraction angle $2\theta$ = about 41.6°.

Peak intensity IC: the peak intensity of the wurtzite type boron nitride obtained by excluding background from a peak intensity at a diffraction angle $2\theta$ = about 40.8°.

Peak intensity ID: the peak intensity of the cubic boron nitride obtained by excluding background from a peak intensity at a diffraction angle $2\theta$ = about 43.5°.

At each of the five measurement positions, peak intensity IA, peak intensity IB, peak intensity IC, and peak intensity ID are measured to obtain the value of (IA+IB+IC)/ID. The average value of the values of (IA+IB+IC)/ID at the five measurement positions corresponds to (IA+IB+IC)/ID in the cubic boron nitride sintered material.

It should be noted that in the measurement performed by the Applicant, as long as peak intensity IA, peak intensity IB, peak intensity IC, and peak intensity ID are measured in the same sample, results of measurement were not substantially varied even when measurement positions to be selected were changed and calculation was performed multiple times. It was confirmed that the results of measurement are not intentional even when a measurement position is

set arbitrarily.

<Application>

The cubic boron nitride sintered material according to the present disclosure is suitably used for a cutting tool, a wear-resistant tool, a grinding tool, or the like.

Each of the cutting tool, the wear-resisting tool and the grinding tool employing the cubic boron nitride sintered material according to the present disclosure may be entirely constituted of the cubic boron nitride sintered material, or only a portion thereof (for example, a cutting edge portion in the case of the cutting tool) may be constituted of the cubic boron nitride sintered material. Moreover, a coating film may be formed on a surface of each of the tools.

Examples of the cutting tool include a drill, an end mill, an indexable cutting insert for drill, an indexable cutting insert for end mill, an indexable cutting insert for milling, an indexable cutting insert for turning, a metal saw, a gear cutting tool, a reamer, a tap, a cutting bite, and the like.

Examples of the wear-resistant tool include a die, a scriber, a scribing wheel, a dresser, and the like. Examples of the grinding tool include a grinding stone and the like.

Not part of the invention: Method of Producing Cubic Boron Nitride Sintered Material]

A method of producing a cubic boron nitride sintered material according to the present disc, not part of the invention, is a method of producing the cubic boron nitride sintered material according to the first embodiment and includes: a first step of obtaining a powder mixture by mixing a hexagonal boron nitride powder and a binder powder; and a second step of obtaining the cubic boron nitride sintered material by sintering the powder mixture by increasing a pressure to more than or equal to 8 GPa and less than or equal to 20 GPa, increasing a temperature to more than or equal to 2300°C and less than or equal to 2500°C, and holding, for more than or equal to 30 minutes and less than 90 minutes, the powder mixture at maximum pressure and maximum temperature reached by increasing the pressure and the temperature.

<First Step>

First, a hexagonal boron nitride powder and a binder powder are prepared. The purity (content ratio of the hexagonal boron nitride) of the hexagonal boron nitride powder is preferably more than or equal to 98.5%, is more preferably more than or equal to 99%, and is most preferably 100%. Each of the particle sizes of the hexagonal boron nitride powder is not particularly limited, and can be more than or equal to 0.1 $\mu$m and less than or equal to 10 $\mu$m, for example.

The binder powder is selected in accordance with the composition of the intended binder phase. Specifically, particles each composed of the first compound(s) described in the binder phase of the first embodiment can be used. In addition to the particles composed of the first compound(s), particles each composed of the aluminum compound(s) can be used. Each of the particle sizes of the binder powder is not particularly limited, and can be more than or equal to 0.1 $\mu$m and less than or equal to 10 $\mu$m, for example.

Next, the hexagonal boron nitride powder and the binder powder are mixed to obtain a powder mixture. The mixing ratio of the hexagonal boron nitride powder and the binder powder is adjusted such that the ratio of the cubic boron nitride grains in the finally obtained cubic boron nitride sintered material becomes more than or equal to 40 volume% and less than or equal to 85 volume%.

For the mixing, for example, a mixing device such as a ball mill or an attritor can be used. A mixing time is, for example, more than or equal to about 5 hours and less than or equal to about 24 hours.

In the powder mixture thus obtained, the hexagonal boron nitride powder can include boron oxide generated by influence of surface oxidation during the mixing, can include moisture, or can include an adsorption gas. These impurities inhibit direct conversion from hexagonal boron nitride to cubic boron nitride. Otherwise, these impurities act as catalysts to cause grain growth, thereby weakening the binding between the cubic boron nitride grains. Therefore, it is preferable to remove the impurities by performing high temperature purification treatment. For example, the boron oxide or the adsorption gas can be removed by performing heat treatment onto the powder mixture under a condition of more than or equal to 2050°C in a nitrogen gas or under a condition of more than or equal to 1650°C in vacuum. The powder mixture thus obtained includes a very small amount of impurities and is suitable for direct conversion from hexagonal boron nitride to cubic boron nitride.

(Second Step)

In the second step, the cubic boron nitride sintered material is obtained by sintering the powder mixture by increasing a pressure to more than or equal to 8 GPa and less than or equal to 20 GPa, increasing a temperature to more than or equal to 2300°C and less than or equal to 2500°C, and holding, for more than or equal to 30 minutes and less than 90 minutes, the powder mixture at maximum pressure and maximum temperature reached by increasing the pressure and the temperature. On this occasion, the hexagonal boron nitride is converted directly into the cubic boron nitride. Further, the powder mixture is sintered at the same time as the conversion from hexagonal boron nitride to cubic boron nitride, thereby obtaining the cubic boron nitride sintered material.

In the second step, the conversion from hexagonal boron nitride to cubic boron nitride is performed directly without using a catalyst element. In order to attain this, the pressure and temperature in the sintering condition for the powder mixture need to be higher than the pressure and temperature in the conventional sintering condition in which a catalyst element is used.

Examples

The following describes the present embodiment more specifically by way of examples. However, the present embodiment is not limited by these examples.

[Example 1]

<Production of Cubic Boron Nitride Sintered Material>

[Samples No. 1 to No. 6 and Samples No. 13 to No. 22]

Each of cubic boron nitride sintered materials of samples No. 1 to No. 6 and samples No. 13 to No. 22 was produced by the following production method.

(First Step)

First, a hexagonal boron nitride powder (indicated as "hBN powder" in Table 1) having an average particle size of 10 $\mu$m and a binder powder having a composition shown in the column "Source Material Powders" of "First Step" of Table 1 were prepared as starting materials (source materials). For example, in sample No. 1, a TiN powder was prepared as the binder powder.

The mixing ratio of the hexagonal boron nitride powder and the binder powder was adjusted such that the ratio of the cubic boron nitride grains in the finally obtained cubic boron nitride sintered material became the ratio described in the column "cBN Grains (Volume%)" of the "Cubic Boron Nitride Sintered Material" in Table 1. When two or more binder powders were used, each of the mass ratios of the binder powders is described in parentheses subsequent to the composition of the binder powder. For example, in sample No. 17, it is indicated that 85 mass% of $TiN_{0.5}$ powder and 15 mass% of Al powder are included in the binder powder.

The hexagonal boron nitride powder and the binder powder were mixed for 5 hours using a ball mill. Thus, a powder mixture was obtained. The powder mixture was subjected to heat treatment at a temperature of 2050°C under a nitrogen atmosphere, thereby removing impurities (high temperature purification treatment).

(Second Step)

The powder mixture having been through the high temperature purification treatment was introduced into a capsule composed of tantalum, and was held at pressure, temperature, and time shown in the columns "Pressure (GPa)", "Temperature (°C)", and "Time (min)" of "Second Step" in Table 1 using an ultra-high pressure and high temperature generation apparatus, thereby obtaining the cubic boron nitride sintered material.

[Samples No. 7 to No. 12]

Each of cubic boron nitride sintered materials of samples No. 7 to No. 12 was produced by the following production method.

(First Step)

First, a cubic boron nitride powder (indicated as "cBN Powder" in Table 1) having an average particle size of 1 $\mu$m and a binder powder having a composition shown in the column "Source Material Powders" of "First Step" of Table 1 were prepared as starting materials (source materials). The cubic boron nitride powder is produced by a conventional method using a catalyst.

The cubic boron nitride powder and the binder powder were blended in the following volume ratio: the cBN powder : the binder powder = 55 : 45. Further, the cubic boron nitride powder and the binder powder were mixed for 5 hours using a ball mill. Thus, a powder mixture was obtained. The powder mixture was subjected to heat treatment at a temperature of 2050°C under a nitrogen atmosphere, thereby removing impurities (high temperature purification treatment).

(Second Step)

The powder mixture having been through the high temperature purification treatment was introduced into a capsule composed of tantalum, and was held at pressure, temperature, and time shown in the columns "Pressure (GPa)", "Temperature (°C)", and "Time (min)" of "Second Step" in Table 1 using an ultra-high pressure and high temperature generation apparatus, thereby obtaining the cubic boron nitride sintered material.

[Table 1]

| Sample No. | Production Conditions | | | | | | | | | | Cubic Boron Nitride Sintered Material | | | | | | | | | | | Evaluation |
| | First Step | | Second Step | | | cBN Grains (Volume%) | Binder Phase (Volume%) | Number-Based Ratio of cBN Grains | | Composition of Binder Phase | (IA+IB+IC)/ID | Contents of Catalyst Elements in cBN Grains (Mass%) | | | | | | Flank Wear Amount (mm) |
| | Source Material Powders | Pressure (GPa) | Temperature (°C) | Time (min) | | | | Equivalent Circle Diameter of More Than 0.5 $\mu$m (%) | Equivalent Circle Diameter of More Than 2 $\mu$m (%) | | | Li | Mg | Ca | Sr | Ba | Be | |
| 1 | hBN, TiN | 14 | 2300 | 40 | | 35 | 65 | 85 | 22 | TiN | - | - | - | - | - | - | - | Breakage |
| 2-1 | hBN, TiN | 14 | 2300 | 40 | | 40 | 60 | 85 | 22 | TiN | - | - | - | - | - | - | - | 0.072 Fine Chipping |
| 2-2 | hBN, TiN | 14 | 2300 | 40 | | 45 | 55 | 85 | 22 | TiN | - | - | - | - | - | - | - | 0.046 |
| 3 | hBN, TiN | 14 | 2300 | 40 | | 55 | 45 | 85 | 22 | TiN | - | - | - | - | - | - | - | 0.062 |
| 4 | hBN, TiN | 14 | 2300 | 40 | | 75 | 25 | 85 | 22 | TiN | - | - | - | - | - | - | - | 0.079 |
| 5 | hBN, TiN | 14 | 2300 | 40 | | 85 | 15 | 85 | 22 | TiN | - | - | - | - | - | - | - | 0.092 |
| 6 | hBN, TiN | 14 | 2300 | 40 | | 90 | 10 | 85 | 22 | TiN | - | - | - | - | - | - | - | 0.121 |
| 7 | cBN, TiN | 5 | 1250 | 20 | | 55 | 45 | 85 | 22 | TiN | - | 0.004 | - | - | - | - | - | 0.119 |
| 8 | cBN, TiN | 5 | 1250 | 20 | | 55 | 45 | 85 | 22 | TiN | - | 0.01 | 0.002 | - | - | - | - | 0.128 |
| 9 | cBN, TiN | 5 | 1250 | 20 | | 55 | 45 | 85 | 22 | TiN | - | - | 0.02 | 0.008 | - | - | - | 0.132 |
| 10 | cBN, TiN | 5 | 1250 | 20 | | 55 | 45 | 85 | 22 | TiN | - | 0.008 | 0.03 | - | 0.01 | - | - | 0.138 |
| 11 | cBN, TiN | 5 | 1250 | 20 | | 55 | 45 | 85 | 22 | TiN | - | 0.03 | 0.01 | - | - | 0.03 | - | 0.142 |
| 12 | cBN, TiN | 5 | 1250 | 20 | | 55 | 45 | 85 | 22 | TiN | - | 0.01 | 0.002 | 0.05 | 0.04 | - | 0.01 | 0.182 |
| 13 | hBN, TiN | 10 | 2200 | 20 | | 55 | 45 | 38 | 5 | TiN | - | - | - | - | - | - | - | 0.111 |
| 14 | hBN, TiN | 10 | 2400 | 35 | | 55 | 45 | 55 | 15 | TiN | - | - | - | - | - | - | - | 0.082 |
| 15 | hBN, TiN | 14 | 2400 | 60 | | 55 | 45 | 90 | 45 | TiN | - | - | - | - | - | - | - | 0.072 |
| 16 | hBN, TiN | 14 | 2400 | 90 | | 55 | 45 | 96 | 70 | TiN | - | - | - | - | - | - | - | Breakage |
| 17 | hBN,TiN$_{0.5}$ (85),Al(15) | 14 | 2300 | 40 | | 55 | 45 | 85 | 22 | TiN, TiB$_2$, Ti$_2$AiN | - | - | - | - | - | - | - | 0.065 |
| 18 | hBN, TiC | 14 | 2300 | 40 | | 55 | 45 | 85 | 22 | TiC | - | - | - | - | - | - | - | 0.053 |
| 19 | hBN, TiC$_{0.6}$ (50), HfC(50) | 14 | 2300 | 40 | | 55 | 45 | 85 | 22 | TiC, TiB$_2$, HfB$_2$, HfC | - | - | - | - | - | - | - | 0.068 |

| Sample No. | Production Conditions | | | | Cubic Boron Nitride Sintered Material | | | | | | | | | | | | | Evaluation |
| | First Step | Second Step | | | cBN Grains (Volume%) | Binder Phase (Volume%) | Number-Based Ratio of cBN Grains | | Composition of Binder Phase | $(IA+IB+IC)/ID$ | Contents of Catalyst Elements in cBN Grains (Mass%) | | | | | | Flank Wear Amount (mm) |
| | Source Material Powders | Pressure (GPa) | Temperature (°C) | Time (min) | | | Equivalent Circle Diameter of More Than 0.5 $\mu$m (%) | Equivalent Circle Diameter of More Than 2 $\mu$m (%) | | | Li | Mg | Ca | Sr | Ba | Be | |
| 20 | hBN, TiN(50), TiC(50) | 14 | 2300 | 40 | 55 | 45 | 85 | 22 | $TiN,TiC,TiB_2$ | - | - | - | - | - | - | - | 0.058 |
| 21 | hBN, $Al_2O_3$(90), ZrN(5), ZrC(5) | 14 | 2300 | 40 | 55 | 45 | 85 | 22 | $Al_2O_3$,ZrN, ZrC | - | - | - | - | - | - | - | 0.083 |
| 22 | hBN, $TiN_{0.7}$ | 14 | 2300 | 40 | 55 | 45 | 85 | 22 | TiN, $TiB_2$ | - | - | - | - | - | - | - | 0.070 |

EP 4 079 708 B1

<Measurement>

(Composition of Cubic Boron Nitride Sintered Material)

The composition of the cubic boron nitride sintered material of each of the samples (the content ratio of the cubic boron nitride and the content ratio of the binder phase) was measured by image analysis on an SEM reflected electron image. A specific measurement method is indicated in the first embodiment, and therefore will not be described repeatedly. Results are shown in the columns "cBN Grains (Volume%)" and "Binder Phase (Volume%)" of the "Cubic Boron Nitride Sintered Material" in Table 1.

(Composition of Binder Phase)

The composition of the binder phase of each sample was measured using an X-ray diffraction method. A specific measurement method is indicated in the first embodiment, and therefore will not be described repeatedly. Results are shown in the column "Composition of Binder Phase" in Table 1.

(Grain Sizes of Cubic Boron Nitride Grains)

The grain sizes of the cubic boron nitride grains of each of the samples were measured by image analysis on an SEM reflected electron image, and the number-based ratio of cubic boron nitride grains each having an equivalent circle diameter of more than 0.5 $\mu$m and the number-based ratio of cubic boron nitride grains each having an equivalent circle diameter of more than 2 $\mu$m were calculated. A specific measurement method is indicated in the first embodiment, and therefore will not be described repeatedly. Results are shown in the columns "Equivalent Circle Diameter of More Than 0.5 $\mu$m (%)" and "Equivalent Circle Diameter of More Than 2 $\mu$m (%)" of "Number-Based Ratio of cBN Grains" in Table 1.

(Content of Catalyst Elements)

Types and contents of the catalyst elements in the cubic boron nitride grains of each of the samples were measured by ICP emission spectrometry. A specific measurement method is indicated in the first embodiment, and therefore will not be described repeatedly. Results are shown in the column "Contents of Catalyst Elements in cBN Grains (Mass%)" in Table 1. It should be noted that when "-" is indicated in a result, it is indicated that the catalyst elements were not detected and the content thereof is less than the detection limit (0.001 mass%).

(X-Ray Diffraction Spectrum)

X-ray diffraction measurement was performed on the cubic boron nitride grains of each of the samples to obtain an X-ray diffraction spectrum. A specific measurement method is indicated in the first embodiment, and therefore will not be described repeatedly. Based on the X-ray diffraction spectrum, peak intensity IA originated from the compressed hexagonal boron nitride, peak intensity IB originated from the hexagonal boron nitride, peak intensity IC originated from the wurtzite type boron nitride, and peak intensity ID originated from the cubic boron nitride were measured to obtain the value of (IA+IB+IC)/ID. Results are shown in the column "(IA+IB+IC)/ID" in Table 1. It should be noted that when "-" is indicated in a result, it is indicated that none of peak intensity IA originated from the compressed hexagonal boron nitride, peak intensity IB originated from the hexagonal boron nitride, and peak intensity IC originated from the wurtzite type boron nitride was detected and only the peak originated from the cubic boron nitride was detected. That is, when "-" is indicated in a result, it is indicated that (IA+IB+IC)/ID = 0.

<Evaluation>

(Production of Cutting Tool and Evaluation on Cutting Performance)

A tool having a tool shape SNMN120408 was produced using the cubic boron nitride sintered material of each of the samples as its cutting edge. A cutting test was performed using the tool under the following cutting conditions to evaluate wear resistance and breakage resistance.

(Cutting Conditions)

Cutting method: dry cutting
Workpiece: bearing steel SUJ2 round bar (hardness HRc61)
Cutting rate: 170 m/min
Feed: 0.12 mm/rev.
Depth of cut: ap = 0.2 mm
Evaluation method: flank wear amount (unit: mm) when cutting was performed for 10 minutes.

The above-described cutting conditions correspond to the high-load processing of hardened steel. It is indicated that as the flank wear amount is smaller, the wear resistance is higher and the cutting performance is more excellent. Results are shown in the column "Flank Wear Amount (mm)" in Table 1. It should be noted that "Breakage" is indicated when breakage of the tool occurred within 10 minutes after starting the cutting.

<Analysis>

Each of the production conditions and the obtained cubic boron nitride sintered materials of samples No. 2-1, No. 2-2, No. 3 to No. 5, No. 14, No. 15, and No. 17 to No. 22 corresponds to an example of the present disclosure. Each of the tools employing these cubic boron nitride sintered materials exhibited excellent cutting performance even in the high-load processing of hardened steel.

In the cubic boron nitride sintered material obtained by the production method of sample No. 1, the content ratio of the cubic boron nitride grains was 35 volume%, which corresponds to a comparative example. Therefore, the production condition of sample No. 1 also corresponds to the comparative example. Breakage of the tool employing the cubic boron nitride sintered material occurred within 10 minutes after starting the cutting. This is presumably due to the following reason: since the ratio of the cubic boron nitride grains was less than 40 volume%, the ratio of the binder phase inferior in strength was large in the cubic boron nitride sintered material, with the result that the hardness of the cubic boron nitride sintered material was decreased.

In the cubic boron nitride sintered material obtained by the production method of sample No. 6, the content ratio of the cubic boron nitride grains was 90 volume%, which corresponds to a comparative example. Therefore, the production condition of sample No. 6 also corresponds to the comparative example. The tool employing the cubic boron nitride sintered material had a large flank wear amount and inferior wear resistance as compared with those of the example of the present disclosure. This is presumably due to the following reason: since the ratio of the cubic boron nitride grains was more than 85 volume%, the ratio of the binder phase that maintains binding between the cubic boron nitride grains was small, with the result that the cubic boron nitride grains were likely to fall to facilitate progress of wear.

Each of the production conditions of samples No. 7 to No. 12 employs a cubic boron nitride powder produced by a conventional method using a catalyst and corresponds to a comparative example. In each of the sintered materials of samples No. 7 to No. 12, the content of the catalyst elements in the cubic boron nitride grains was more than or equal to 0.001 mass%, which corresponds to a comparative example. Each of tools employing these cubic boron nitride sintered materials had a large flank wear amount and inferior wear resistance as compared with those of the example of the present disclosure. This is presumably due to the following reason: since the catalyst elements present in the cubic boron nitride grains promoted phase conversion from cubic boron nitride to hexagonal boron nitride under a condition of pressure and temperature in the vicinity of a contact point with a workpiece during the processing, the hardness and thermal conductivity were decreased at the cutting edge portion region, with the result that the wear resistance was decreased.

The production condition of sample No. 13 is such that a temperature is 2200°C and a holding time is 20 minutes in the second step, and corresponds to a comparative example. In the cubic boron nitride sintered material of sample No. 13, the number-based ratio of the cubic boron nitride grains each having an equivalent circle diameter of more than 0.5 $\mu$m was 38 %, which corresponds to a comparative example. The tool employing the cubic boron nitride sintered material had a large flank wear amount and inferior wear resistance as compared with those of the example of the present disclosure. This is presumably due to the following reason: since the content ratio of the cubic boron nitride grains each having an equivalent circle diameter of more than 0.5 $\mu$m was small, the ratio of the fine grains each having an equivalent circle diameter of less than or equal to 0.5 $\mu$m was large, with the result that the toughness and thermal conductivity were decreased to result in decreased wear resistance.

The production condition of sample No. 16 was such that a holding time was 90 minutes in the second step, and corresponds to a comparative example. In the cubic boron nitride sintered material of sample No. 16, the cubic boron nitride grains included, on number basis, 70% of cubic boron nitride grains each having an equivalent circle diameter of more than 2 $\mu$m and the cubic boron nitride sintered material of sample No. 16 corresponds to a comparative example. In the tool employing the cubic boron nitride sintered material, breakage occurred within 10 minutes after starting the cutting. This is presumably due to the following reason: since the content ratio of the cubic boron nitride grains each having an equivalent circle diameter of more than 2 $\mu$m was large, the strength was decreased to result in decreased breakage resistance.

[Example 2]

<Production of Cubic Boron Nitride Sintered Material>

[Samples No. 3, No. 8, and No. 23 to No. 26]

Cubic boron nitride sintered materials of samples No. 3 and No. 8 were produced in the same manner as in Example 1. In each of samples No. 23 to No. 26, a cubic boron nitride sintered material was produced in the same manner as in sample No. 1 except that the conditions in the first step and the second step were changed to those shown in the columns "First Step" and "Second Step" in Table 2.

[Table 2]

| Sample No. | Production Conditions | | | | | | | | | | Cubic Boron Nitride Sintered Material | | | | | | | | | | | | | Evaluation |
| | First Step | Second Step | | | cBN Grains (Volume%) | Binder Phase (Volume%) | Number-Based Ratio of cBN Grains | | Composition of Binder Phase | (IA+IB+IC)/ID | Contents of Catalyst Elements in cBN Grains (Mass%) | | | | | | Cutting Time until Breakage (min) |
| | Source Material Powders | Pressure (GPa) | Temperature (°C) | Time (min) | | | Equivalent Circle Diameter of More Than 0.5 $\mu$m(%) | Equivalent Circle Diameter of More Than 2 $\mu$m(%) | | | Li | Mg | Ca | Sr | Ba | Be | |
|---|---|---|---|---|---|---|---|---|---|---|---|---|---|---|---|---|---|
| 3 | hBN,TiN | 14 | 2300 | 40 | 55 | 45 | 85 | 22 | TiN | - | - | - | - | - | - | - | 30 |
| 8 | cBN,TiN | 5 | 1250 | 20 | 55 | 45 | 85 | 22 | TiN | - | 0.01 | 0.002 | - | - | - | - | 9 |
| 23 | hBN,TiN | 15 | 2300 | 40 | 55 | 45 | 85 | 22 | TiN | 0.012 | - | - | - | - | - | - | 22 |
| 24 | hBN,TiN | 16 | 2300 | 40 | 55 | 45 | 85 | 22 | TiN | 0.042 | - | - | - | - | - | - | 21 |
| 25 | hBN,TiN | 17.5 | 2300 | 40 | 55 | 45 | 85 | 22 | TiN | 0.06 | - | - | - | - | - | - | 15 |
| 26 | hBN,TiN | 19 | 2300 | 40 | 55 | 45 | 85 | 22 | TiN | 0.08 | - | - | - | - | - | - | 14 |

<Measurement>

In each of the samples, the composition of the cubic boron nitride sintered material (the content of the cubic boron nitride and the content of the binder phase), the composition of the binder phase, the grain sizes of the cubic boron nitride grains, the content of the catalyst elements, and the X-ray diffraction spectrum were measured in the same manner as in Example 1. Results are shown in Table 2.

<Evaluation>

(Production of Cutting Tool and Evaluation on Cutting Performance)

A tool having a tool shape SNMN120408 was produced using the cubic boron nitride sintered material of each of the samples as its cutting edge. A cutting test was performed using the tool under the following cutting conditions to evaluate breakage resistance.

(Cutting Conditions)

Cutting method: dry cutting
Workpiece: carburized hardened steel, SCr420H, 4U groove (hardness HRc62)
Cutting rate: 170 m/min
Feed: 0.16 mm/rev.
Depth of cut: ap = 0.2 mm
Evaluation method: cutting time until occurrence of breakage (min).

The above-described cutting conditions correspond to the high-load processing of hardened steel. It is indicated that as the cutting time until occurrence of breakage is longer, the breakage resistance is higher and the cutting performance is more excellent. Results are shown in the column "Cutting Time until Breakage (min)" in Table 2.

<Analysis>

Each of the production conditions and the obtained cubic boron nitride sintered materials of samples No. 3 and No. 23 to No. 26 correspond to an example of the present disclosure. In each of the tools employing these cubic boron nitride sintered materials, the time until occurrence of breakage was long and excellent cutting performance was exhibited even in the high-load processing of hardened steel. Among them, in each of the cubic boron nitride sintered materials of samples No. 3, No. 23 and No. 24, the value of (IA+IB+IC)/ID was less than or equal to 0.05, and the cutting performance was very excellent.

The production condition of sample No. 8 employs a cubic boron nitride powder produced by a conventional method using a catalyst and corresponds to a comparative example. In the sintered material of sample No. 8, the content of the catalyst elements in the cubic boron nitride grains was more than or equal to 0.001 mass%, which corresponds to a comparative example. In the tool employing the cubic boron nitride sintered material, the time until occurrence of breakage was short and breakage resistance was inferior as compared with those in the example of the present disclosure. This is presumably due to the following reason: the catalyst elements present in the cubic boron nitride grains promoted phase conversion from cubic boron nitride to hexagonal boron nitride under a condition of pressure and temperature in the vicinity of a contact point with the workpiece during the processing, with the result that the hardness and thermal conductivity were decreased in the cutting edge portion region to result in decreased breakage resistance.

**Claims**

1. A cubic boron nitride sintered material comprising: more than or equal to 40 volume% and less than or equal to 85 volume% of cubic boron nitride grains; and a binder phase, wherein

   the binder phase includes at least one selected from a group consisting of one or more first compounds and a solid solution originated from the first compounds, or includes at least one selected from a group consisting of the one or more first compounds and the solid solution originated from the first compounds and an aluminum compound, the one or more first compounds consisting of at least one element selected from a group consisting of titanium, zirconium, hafnium, vanadium, niobium, tantalum, chromium, molybdenum, and tungsten, and at least one element selected from a group consisting of nitrogen, carbon, boron, and oxygen,
the cubic boron nitride grains include, on number basis, measured using the method described in the description, more than or equal to 50% of cubic boron nitride grains each having an equivalent circle diameter of more than 0.5 $\mu$m, and includes, on number basis, measured using the method described in the description, less than or equal to 50% of cubic boron nitride grains each having an equivalent circle diameter of more than 2 $\mu$m, and
when a mass of the cubic boron nitride grains is assumed as 100 mass%, a total content of lithium, magnesium, calcium, strontium, beryllium, and barium in the cubic boron nitride grains is less than 0.001 mass%.

2. The cubic boron nitride sintered material according to claim 1, wherein

in an X-ray diffraction spectrum of the cubic boron nitride sintered material, a relation of the following formula I is indicated:

$$(IA+IB+IC)/ID \leq 0.05 \ ... \ formula \ I,$$

, where
IA represents a peak intensity originated from compressed hexagonal boron nitride, IB represents a peak intensity originated from hexagonal boron nitride, IC represents a peak intensity originated from wurtzite type boron nitride, and ID represents a peak intensity originated from cubic boron nitride.

## Patentansprüche

1. Kubisches Bornitrid-Sintermaterial, mit: größer oder gleich 40 Volumenprozent und kleiner oder gleich 85 Volumenprozent kubischen Bornitridkörnern; und einer Bindemittelphase, wobei

die Bindemittelphase mindestens eine Verbindung enthält, die aus einer Gruppe ausgewählt ist, die aus einer oder mehreren ersten Verbindungen und einer aus den ersten Verbindungen stammenden festen Lösung besteht, oder mindestens eine Verbindung enthält, die aus einer Gruppe ausgewählt ist, die aus der einen oder den mehreren ersten Verbindungen und der aus den ersten Verbindungen stammenden festen Lösung und einer Aluminiumverbindung besteht, wobei die eine oder die mehreren ersten Verbindungen mindestens ein Element, das aus einer Gruppe ausgewählt ist, die aus Titan, Zirkon, Hafnium, Vanadium, Niob, Tantal, Chrom, Molybdän und Wolfram besteht, und mindestens ein Element enthalten, das aus einer Gruppe ausgewählt ist, die aus Stickstoff, Kohlenstoff, Bor und Sauerstoff besteht,
die kubischen Bornitridkörner, gemessen anhand des in der Beschreibung beschriebenen Verfahrens, größer oder gleich 50 % der kubischen Bornitridkörner mit einem äquivalenten Kreisdurchmesser von mehr als 0,5 $\mu$m enthalten und kleiner oder gleich 50 % der kubischen Bornitridkörner mit einem äquivalenten Kreisdurchmesser von mehr als 2 $\mu$m enthalten, und
wenn eine Masse der kubischen Bornitridkörner als 100 Massenprozent angenommen wird, der Gesamtgehalt an Lithium, Magnesium, Calcium, Strontium, Beryllium und Barium in den kubischen Bornitridkörnern weniger als 0,001 Massenprozent beträgt.

2. Kubisches Bornitrid-Sintermaterial nach Anspruch 1, wobei in einem Röntgenbeugungsspektrum des kubischen Bornitrid-Sintermaterials eine Beziehung der folgenden Formel I angezeigt wird:

$$(IA+IB+IC)/ID \leq 0{,}05 \ ... \ Formel \ I,$$

, wobei IA eine Peakintensität darstellt, die von komprimiertem hexagonalem Bornitrid stammt, IB eine Peakintensität darstellt, die von hexagonalem Bornitrid stammt, IC eine Peakintensität darstellt, die von Wurtzit-Typ-Bornitrid stammt, und ID eine Peakintensität darstellt, die von kubischem Bornitrid stammt.

**Revendications**

1. Matériau fritté de nitrure de bore cubique comprenant: plus de ou égal à 40 % en volume et moins de ou égal à 85 % en volume de grains de nitrure de bore cubique; et une phase liante, dans lequel

   la phase liante inclut au moins un choisi dans un groupe consistant en un ou plusieurs premiers composés et une solution solide provenant des premiers composés, ou inclut au moins un choisi dans un groupe consistant en les un ou plusieurs premiers composés et la solution solide provenant des premiers composés et un composé de l'aluminium, les un ou plusieurs premiers composés consistant en au moins un élément choisi dans un groupe consistant en le titane, le zirconium, le hafnium, le vanadium, le niobium, le tantale, le chrome, le molybdène et le tungstène, et au moins un élément choisi dans un groupe consistant en l'azote, le carbone, le bore et l'oxygène, les grains de nitrure de bore cubique incluent, sur une base numérique, mesuré au moyen du procédé décrit dans la description, plus de ou égal à 50 % de grains de nitrure de bore cubique ayant chacun un diamètre de cercle équivalent supérieur à 0,5 μm, et incluent, sur une base numérique, mesuré au moyen du procédé décrit dans la description, moins de ou égal à 50 % de grains de nitrure de bore cubique ayant chacun un diamètre de cercle équivalent supérieur à 2 μm, et
   lorsqu'une masse des grains de nitrure de bore cubique est prise égale à 100 % en masse, une teneur totale en lithium, magnésium, calcium, strontium, béryllium et baryum des grains de nitrure de bore cubique est inférieure à 0,001 % en masse.

2. Matériau fritté de nitrure de bore cubique selon la revendication 1, dans lequel

   dans un spectre de diffraction des rayons X du matériau fritté de nitrure de bore cubique, une relation de la formule I suivante est indiquée:

$$(IA+IB+IC)/ID \leq 0,05 \ldots \text{ formule I,}$$

   ... , où
   IA représente une intensité maximale provenant de nitrure de bore hexagonal comprimé, IB représente une intensité maximale provenant de nitrure de bore hexagonal, IC représente une intensité maximale provenant de nitrure de bore de type wurtzite, et ID représente une intensité maximale provenant de nitrure de bore cubique.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2005187260 A
- WO 2005066381 A
- JP 2015202981 A
- JP 2015202980 A
- EP 3578534 A